# EUROPEAN PATENT SPECIFICATION

(11) **EP 1 598 245 B1**
(45) Date of publication and mention of the grant of the patent: **06.01.2010**
(21) Application number: 05104186.1
(22) Date of filing: 18.05.2005
(51) Int. Cl.: B60R 25/04, B60R 25/08

(54) **Device and method for preventing unauthorized starting of a vehicle**
Vorrichtung und Verfahren zur Verhinderung unerlaubter Zündung eines Kraftfahrzeugs
Dispositif et méthode pour prévenir un allumage non autorisé d'un véhicule

(30) Priority: 18.05.2004 IT MI20040990
(43) Date of publication of application: 23.11.2005
(73) Proprietor: IVECO S.p.A., 10156 Torino (IT)
(72) Inventor: Marasso, Valter, 10137 Torino (IT); Maule, Roberto, 10139 Torino (IT); Bertozzi, Franco, 10040 Druento (IT)
(74) Representative: Borsano, Corrado

(56) References cited:
- EP-A- 0 903 271
- US-A- 5 079 435
- US-A- 5 818 330
- US-B1- 6 198 996

## Description

The present invention relates to a device and method for preventing unauthorized starting of a vehicle.

In the prior art devices are known that prevent vehicles from starting, to exclude the possibility of unauthorized use, for example to prevent theft. Such devices are usually based on an identification/authentication procedure in which, when the key is inserted into the vehicle's ignition switch, to start the engine, data are exchanged between the ignition key and a control module incorporated in the vehicle. If the module validates and enables the key, the engine can be started, otherwise it cannot.

The key incorporates an electromagnetic device, known as a "transponder", that is activated when in proximity to the control module, with which it exchanges a secret identification code (electronic key).

Once the key has been enabled/validated the control module allows the fuel to be delivered to the engine so that it can start.

These known enabling procedures are still not able to guarantee an adequate level of security, since it may be possible to find other ways of starting the vehicle even without using the proper ignition key.

The US patent N. 6198996 shows a control unit able to adapt the functioning parameters of a vehicle with respect to several conditions. In particular, in case of theft it shows several ways to recover the vehicle. Said document shows a first method according to which the Antilock Braking subsystem may be set to trigger the brakes upon the unauthorized user traveling one or two miles from the user's home. Said document shows a second method according to which once Theft Deterrence and Recovery subsystem detected an unauthorized user, the engine performance parameters stored in Memory would set Engine Performance system to levels that would make the vehicle inoperable.

US-A-5 079 435 discloses also a device for preventing unauthorized starting of a vehicle, comprising means for authenticating an ignition key, means for enabling an emergency starting procedure, a control module that determines the activation of the vehicle's propulsion functions, of the management of the motion, and additional braking, on the basis of said authentication of the ignition key.

The purpose of this invention is to overcome all the drawbacks (solve the problems) described above and providing a device and method for preventing unauthorized starting of a vehicle so that it is possible to extend the level of control and immobilize the vehicle more effectively, by controlling all the electronic circuits that manage vehicle kinematics functions, not only when the vehicle is parked and/or the engine is not running, but also once the engine has been started, so as to control the management of the vehicle motion, propulsion and additional braking.

An object of the present invention is a device for preventing unauthorized starting of a vehicle, that comprises means for authenticating an ignition key, characterized in that it comprises a control means that determines the activation of the propulsion functions, and the control of the motion and of additional braking systems on the basis of said authentication of the ignition key.

In particular this invention relates to a device and method for preventing unauthorized starting of a vehicle, as better described in the claims, which are an integral part of this description.

The purposes and advantages of this invention will become clear from the following detailed description of a preferred embodiment and of its variants and from the drawings that are attached hereto, which are merely illustrative and not limitative, in which:
figure 1 is a block diagram of the device according to this invention;
figure 2 is an operational flow chart of the method according to the present invention.

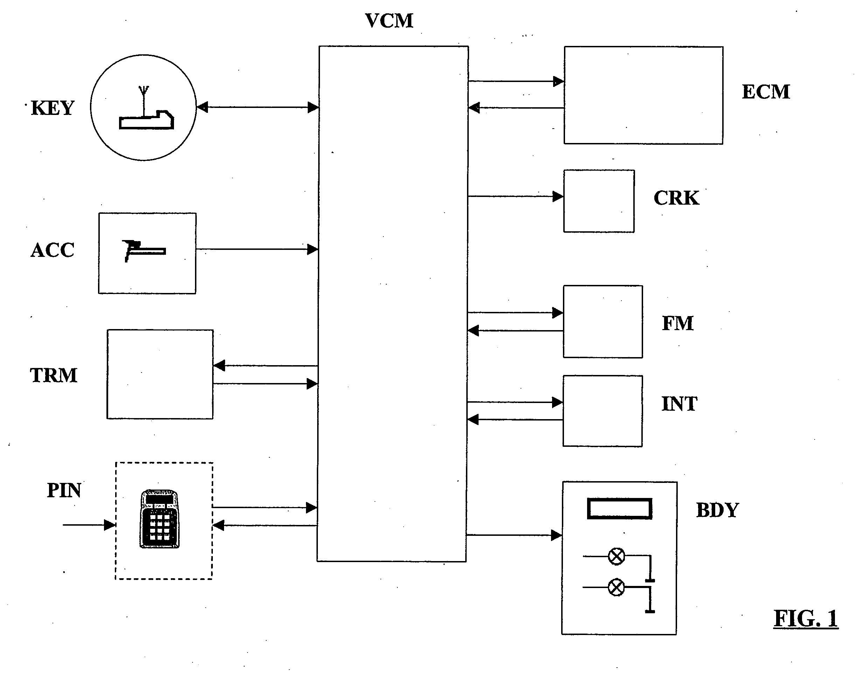

In fig.1 VCM indicates the immobilizer module according to the present invention.

The VCM consists of an electronic device that communicates with an ignition key KEY.

The procedure uses a conventional transponder link to identify and enable the key. Each KEY is identified by means of a unique code that is stored in the VCM during manufacturing, thus creating an univocal association between a given number of keys and the VCM of a vehicle.

Whether or not the KEY is identified as valid determines whether a series of functions, which are described below, are enabled or disabled.

The VCM controls the operation of a module ECM that manages the delivery of fuel to the engine. The VCM enables operation of the ECM if the ignition KEY is identified as valid.

The modules VCM and ECM dialogue via a conventional encrypted protocol according to the SAE J1939/71 standard, using a "challenge/response" technique to exchange messages.

The VCM manages the functioning of the engine brake FM and of the module INT that manages the vehicle's additional braking systems: the INT controls the electric braking systems, such as the hydraulic or electromagnetic retarder.

The VCM manages requests to activate the engine brake FM and the module INT. If the KEY is not identified as valid, the VCM blocks the additional braking systems in the braking position so that the vehicle cannot move.

When the accelerator pedal ACC is operated, the VCM uses a torque map to control the amount of engine torque requested, where torque = f (Engine Speed, Accelerator Pedal Position), called the Driveability map. The request for torque is managed by the VCM, which only allows torque to be transmitted if the key has been identified as valid. The torque map is stored in the VCM.

The VCM manages requests for engine torque from the transmission system TRM (basically the clutch, gearbox). If the KEY is not identified as valid, the VCM blocks the torque control requests from the Transmission Control module to engage the gears and open/close the clutch, thus preventing gear change. This control function is enabled in case of an automatic transmission system.

The VCM enables the activation of the starting motor (cranking) CRK, which is blocked if the KEY is not identified as valid.

The VCM controls an electronic control module BDY that manages the control functions of the electric circuit, such as lights, electric windows, etc. If the key is not identified as valid, the BDY activates the horn and/or hazard warning lights.

If the key is not identified as valid, the VCM enables the use of an emergency starting procedure, which is also used in case of problems, for example if the key is lost or broken.

In that case, a manual starting procedure is performed by entering an unblocking PIN code from the instrument panel (keypad on the steering wheel). Only the driver knows this code, which is previously stored in the VCM.

In this case, when the correct PIN code is entered the control module enables all vehicle functions, in exactly the same way as when the KEY is identified as valid.

From the description set forth above it is apparent that the main characteristic of the device (VCM) for preventing unauthorized starting of a vehicle, according to this invention, consists of determining the activation of the vehicle's propulsion functions and the management circuits of the power transmission and motion control and additional braking systems on the basis of the authentication of the ignition key (KEY).

The person skilled in the art will have no difficulty in embodying the module VCM on the basis of the functions described above. The VCM comprises a series of shut-off functions that are controlled on the basis of the authentication of the KEY.

Such functions may be embodied by means of a program, for example written in C language, using a normal automotive software system.

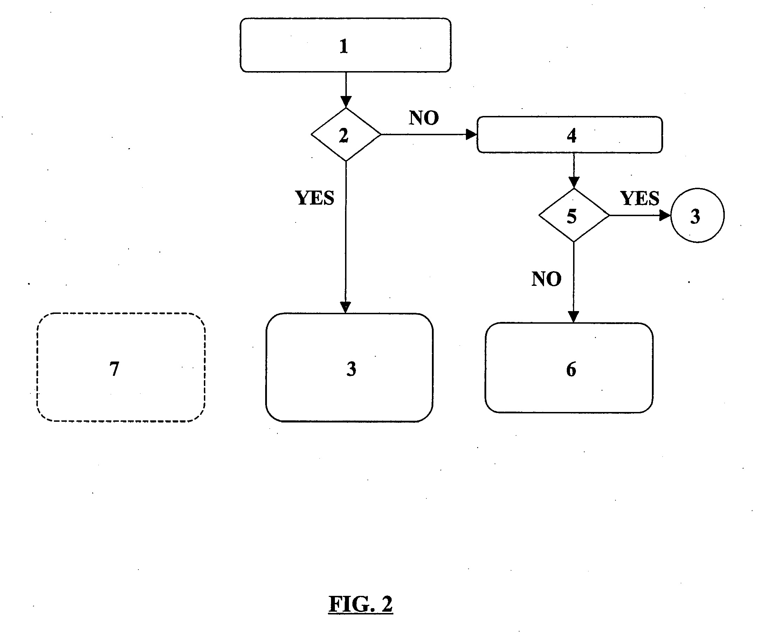

As regards the illustration of the method of operation, reference is made to the operational flow chart in figure 2, which is useful for describing the method of vehicle immobilization according to the present invention.

In the first phase 1 the KEY authentication procedure is carried out.

If the key is authenticated (phase 2 - YES), the VCM authorizes all the systems controlled thereby to become fully operational (phase 3), and thus:
- the starting motor CRK is unblocked;
- the fuel delivery system ECM is unblocked;
- the transmission system TRM is unblocked and fully operational;
- the management circuits of the engine brake FM and additional braking system INT are unblocked;
- all functions in connection with the use of the accelerator pedal ACC to request torque are unblocked;
- the hazard warning lights and the acoustic alarm of the electronic control module BDY are not activated;

If the key is not authenticated (phase 2 - NO), the VCM enables the use of the emergency starting procedure (phase 4 in which the PIN code can be entered to unblock the system manually).

If the PIN code is not entered, or if the PIN code is incorrect after a maximum number of attempts (phase 5 - NO), the VCM immobilizes the vehicle (phase 6), and thus:
- the starting motor CRK is blocked;
- the delivery of fuel to the engine ECM is blocked;
   requests for torque from the transmission system TRM are blocked;
   the request for torque from the accelerator pedal ACC is blocked;
   the engine brake FM and additional braking system INT are activated;
- the hazard warning lights and acoustic alarm are activated.

Alternatively, if the PIN code is entered correctly (phase 5 - YES), the system acts in exactly the same way as when the KEY is identified as valid, and goes to the phase 3 described above.

In the unlikely event of the vehicle's engine being started in a fraudulent manner, even though the ignition KEY has not been authenticated, i.e. by bypassing the KEY and PIN code validation procedures, the VCM is able to switch to a degraded operation mode (phase 7) in which for example the VCM only allows the accelerator ACC to request minimum engine torque, limiting the number of engine revolutions (e.g. maximum 1000 RPM), and/or may only authorize the transmission module TRM to enable engagement of the 1^{st} gear, and/or may activate the vehicle's braking system.

This invention can be implemented advantageously in a computer program comprising program code means for performing one or more steps of such method, when such program is run on a computer. For this reason the patent shall also cover such computer program and the computer-readable medium that comprises a recorded message, such computer-readable medium comprising the program code means for performing one or more steps of such method, when such program is run on a computer.

It will be apparent to the person skilled in the art that other alternative and equivalent embodiments of the invention can be conceived and reduced to practice without departing from the scope of the present invention.

It will be possible for the person skilled in the art to embody the invention without introducing any further construction details.

## Claims

1. Device for preventing unauthorized starting of a vehicle, comprising means for authenticating an ignition key (KEY), means for enabling an emergency starting procedure (PIN), a control module (VCM) that determines the activation of the vehicle's propulsion functions, of the management of the motion, and additional braking, on the basis of said authentication of the ignition key (KEY), said control module (VCM) being able to control a transmission module (TRM) and **characterized in that** said control module (VCM) enables the engagement of the first gear and limits the gear ratios that can be engaged when said authenticating means and emergency starting means are bypassed.

2. Device according to claim 1, **characterized in that** said control module (VCM) comprises:
- means for activating the delivery of fuel (ECM) to the engine;
- means for activating the vehicle's additional braking functions (FM, INT);
- means for activating a map of the torque requested by the vehicle's accelerator pedal (ACC) ;
- means for managing the amount of engine torque requested by the vehicle's transmission systems (TRM);
- means for activating the vehicle's starting motor (CRK);
- means for activating the vehicle's acoustic alarms and/or hazard lights (BDY).

3. Device according to claim 1 or 2, wherein, if said ignition key (KEY) authentication fails, said control module (VCM) activates a procedure for entering an unblocking code and that, if said unblocking code is entered correctly, determines the activation of said propulsion functions, of the management of the motion and of additional braking systems or, if said unblocking code is entered incorrectly, determines the complete immobilization of the vehicle.

4. Device according to claim 1 or 2, **characterized in that** said control module (VCM) is able to:
- limit the maximum number of engine revolutions and/or;
- authorizing only the engagement of the 1^{st} gear and/or;
- activate the vehicle's braking system;
when said authenticating means and emergency starting means are bypassed.

5. Method for preventing unauthorized starting of a vehicle, comprising an authentication procedure and emergency starting procedure **characterized in that** if the authentication procedure and the emergency starting procedure are bypassed, a degraded vehicle operation is activated by enabling the engagement of the first gear and limiting the gear ratios that can be engaged.

6. Method according to claim 5, **characterized in that** it comprises an additional step of said degraded vehicle operation:
- limiting the maximum number of engine revolutions and/or;
- authorizing only the engagement of the 1^{st} gear and/or and/or,
- activating the vehicle's braking system.

7. Method according to claim 6, where said maximum number of engine revolutions is 1000 RPM.

8. Method according to claim 5, **characterized in that** it comprises the following preceding steps:
- authentication of an ignition key (KEY);
- if the key is authenticated (phase 2 - YES), the system authorizes complete operation of the propulsion functions, of the management of the motion and of the additional braking systems (phase 3);
- if the key is not authenticated (phase 2 - NO), an emergency starting procedure is activated (phase 4) in order to enter an unblocking code (PIN);
- if said unblocking code is entered correctly, the complete operation of the propulsion functions, of the management of the motion control and of additional braking systems is authorised (phase 3);
- if said unblocking code is not entered correctly, the vehicle is completely blocked (phase 6).

9. Computer program comprising program code means for performing the steps in claims 5, 6 and 7, when said program is run on a computer.

10. Computer-readable medium comprising a recorded program, said computer-readable medium comprising the program code means in order to perform the steps in claims 5, 6 and 7, when said program is run on a computer.

## Patentansprüche

1. Vorrichtung zum Verhindern des unerlaubten Anlassens eines Fahrzeugs, umfassend ein Mittel zum Authentifizieren eines Zündschlüssels (KEY), ein Mittel zum Anschalten eines Notanlassverfahrens (PIN), ein Steuerungsmodul (VCM), das die Aktivierung der Vortriebsfunktionen des Fahrzeugs, des Bewegungsmanagements und eines zusätzlichen Bremsens auf der Grundlage der Authentifizierung des Zündschlüssels (KEY) bestimmt, wobei das Steuerungsmodul (VCM) dazu geeignet ist, ein Übersetzungsmodul (TRM) zu steuern und **dadurch gekennzeichnet ist, dass** das Steuerungsmodul (VCM) das Einlegen des ersten Gangs aktiviert und die Getriebeübersetzungen, die eingelegt werden können, beschränkt, wenn das Authentifizierungsmittel und das Notanlassmittel umgangen werden.

2. Vorrichtung nach Anspruch 1, **dadurch gekennzeichnet, dass** das Steuerungsmodul (VCM) umfasst:
- ein Mittel zum Aktivieren des Zuführens von Treibstoff (ECM) zu dem Motor;
- ein Mittel zum Aktivieren der zusätzlichen Bremsfunktionen (FM, INT) des Fahrzeugs;
- ein Mittel zum Aktivieren eines Kennfelds des Drehmoments, das durch das Gaspedal (ACC) des Fahrzeugs angefordert wird;
- ein Mittel zum Regeln des Maßes des Motordrehmoments, das durch die Übersetzungssysteme (TRM) des Fahrzeugs angefordert wird;
- ein Mittel zum Aktivieren des Anlassers (CRK) des Fahrzeugs;
- ein Mittel zum Aktivieren der akustischen Alarms und/oder Gefahrlichter (BDY) des Fahrzeugs.

3. Vorrichtung nach Anspruch 1 oder 2, wobei das Steuerungsmodul (VCM), wenn die Authentifizierung des Zündschlüssels (KEY) fehlschlägt, ein Verfahren zum Eingeben eines Entsperrcodes aktiviert, und welches, wenn der Entsperrcode korrekt eingegeben wird, die Aktivierung der Vortriebsfunktionen, des Bewegungsmanagements und zusätzlicher Bremssysteme bestimmt oder, wenn der Entsperrcode falsch eingegeben wird, die vollständige Stilllegung des Fahrzeugs bestimmt.

4. Vorrichtung nach Anspruch 1 oder 2, **dadurch gekennzeichnet, dass** das Steuerungsmodul (VCM) dazu in der Lage ist,
- die maximale Anzahl von Motorumdrehungen zu beschränken und/oder;
- nur das Einlegen des ersten Gangs zu erlauben und/oder;
- das Bremssystem des Fahrzeugs zu aktivieren; wenn das Authentifizierungsmittel und das Notanlassmittel umgangen werden.

5. Verfahren zum Verhindern eines unerlaubten Anlassens eines Fahrzeugs, umfassend ein Authentifizierungsverfahren und ein Notanlassverfahren, **dadurch gekennzeichnet, dass**, wenn das Authentifizierungsverfahren und das Notanlassverfahren umgangen werden, ein geschwächter Fahrzeugbetrieb dadurch aktiviert wird, dass das Einlegen des ersten Gangs aktiviert wird und die Getriebeübersetzungen, die eingelegt werden können, begrenzt werden.

6. Verfahren nach Anspruch 5, **dadurch gekennzeichnet, dass** es einen zusätzlichen Schritt des geschwächten Fahrzeugbetriebs umfasst:
- Begrenzen der maximalen Anzahl von Motorumdrehungen und/oder;
- Erlauben des Einlegens nur des ersten Gangs und/oder
- Aktivieren des Bremssystems des Fahrzeugs.

7. Verfahren nach Anspruch 6, wobei die maximale Anzahl von Motorumdrehungen 1000 U/Min ist.

8. Verfahren nach Anspruch 5, **dadurch gekennzeichnet, dass** es die folgenden vorangehenden Schritte umfasst:
- Authentifizieren eines Zündschlüssels (KEY);
- wenn der Schlüssel authentifiziert ist (Phase 2 - JA), autorisiert das System den vollständigen Betrieb der Vortriebsfunktionen, des Bewegungsmanagements und der zusätzlichen Bremssysteme (Phase 3);
- wenn der Schlüssel nicht authentifiziert ist (Phase 2
- NEIN), wird ein Notanlassverfahren aktiviert (Phase 4), um einen Entsperrcode (PIN) einzugeben;
- wenn der Entsperrcode korrekt eingegeben wird, wird der vollständige Betrieb der Vortriebsfunktionen, des Bewegungssteuerungsmanagements und zusätzlicher Bremssysteme autorisiert (Phase 3);
- wenn der Entsperrcode nicht korrekt eingegeben wird, wird das Fahrzeug vollständig gesperrt (Phase 6).

9. Computerprogramm, umfassend Programmcodemittel zum Durchführen der Schritte in den Ansprüchen 5, 6 und 7, wenn das Programm auf einem Computer betrieben wird.

10. Computerlesbares Medium, umfassend ein aufgenommenes Programm, wobei das computerlesbare Medium die Programmcodemittel aufweist, um die Schritte in den Ansprüchen 5, 6 und 7 durchzuführen, wenn das Programm auf einem Computer betrieben wird.

## Revendications

1. Dispositif pour empêcher le démarrage non autorisé d'un véhicule, comprenant des moyens pour authentifier une clé de contact (KEY), des moyens pour permettre une procédure de démarrage d'urgence (PIN), un module de commande (VCM) qui détermine l'activation des fonctions de propulsion du véhicule, de la gestion du déplacement et de freinage supplémentaire, sur la base de ladite authentification de la clé de contact (KEY), ledit module de commande (VCM) étant capable de commander un module de transmission (TRM) et étant **caractérisé en ce que** ledit module de commande (VCM) permet l'engagement de la première vitesse et limite les rapports des vitesses qui peuvent être engagées lorsque lesdits moyens d'authentification et moyens de démarrage d'urgence sont contournés.

2. Dispositif selon la revendication 1, **caractérisé en ce que** ledit module de commande (VCM) comprend :
- des moyens pour activer la distribution de carburant (ECM) au moteur ;
- des moyens pour activer les fonctions de freinage supplémentaire (FM, INT) du véhicule ;
- des moyens pour activer une carte du couple demandé par la pédale d'accélérateur (ACC) du véhicule ;
- des moyens pour gérer la quantité de couple moteur demandée par les systèmes de transmission (TRM) du véhicule ;
- des moyens pour activer le moteur de démarrage (CRK) du véhicule ;
- des moyens pour activer les alarmes sonores et/ou les feux de détresse (BDY) du véhicule.

3. Dispositif selon la revendication 1 ou 2, dans lequel, si ladite authentification de la clé de contact (KEY) échoue, ledit module de commande (VCM) active une procédure pour entrer un code de déverrouillage et, si ledit code de déverrouillage est entré correctement, détermine l'activation desdits fonctions de propulsion, de la gestion du déplacement et des systèmes de freinage supplémentaire ou, si ledit code de déverrouillage est entré de manière erronée, détermine l'immobilisation complète du véhicule.

4. Dispositif selon la revendication 1 ou 2, **caractérisé en ce que** ledit module de commande (VCM) est capable :
- de limiter le nombre maximum de tours du moteur ; et/ou
- d'autoriser uniquement l'engagement de la première vitesse ; et/ou
- d'activer le système de freinage du véhicule ;
lorsque lesdits moyens d'authentification et moyens de démarrage d'urgence sont contournés.

5. Procédé pour empêcher le démarrage non autorisé d'un véhicule, comprenant une procédure d'authentification et une procédure de démarrage d'urgence, **caractérisé en ce que**, si la procédure d'authentification et la procédure de démarrage d'urgence sont contournées, un fonctionnement dégradé du véhicule est activé en permettant l'engagement de la première vitesse et en limitant les rapports des vitesses qui peuvent être engagées.

6. Procédé selon la revendication 5, **caractérisé en ce qu'**il comprend une étape supplémentaire dudit fonctionnement dégradé du véhicule consistant à :
- limiter le nombre maximum de tours du moteur ; et/ou
- autoriser uniquement l'engagement de la première vitesse ; et/ou
- activer le système de freinage du véhicule.

7. Procédé selon la revendication 6, dans lequel ledit nombre maximum de tours du moteur est de 1000 tr/mn.

8. Procédé selon la revendication 5, **caractérisé en ce qu'**il comprend les étapes précédentes suivantes auxquelles :
- une clé de contact (KEY) est authentifiée ;
- si la clé est authentifiée (phase 2 - oui), le système autorise le fonctionnement complet des fonctions de propulsion, de la gestion du déplacement et des systèmes de freinage supplémentaire (phase 3) ;
- si la clé n'est pas authentifiée (phase 2 - non), une procédure de démarrage d'urgence est activée (phase 4) afin d'entrer un code de déverrouillage (PIN) ;
- si ledit code de déverrouillage est entré correctement, le fonctionnement complet des fonctions de propulsion, de la gestion de la commande de déplacement et des systèmes de freinage supplémentaire est autorisé (phase 3) ;
- si ledit code de déverrouillage n'est pas entré correctement, le véhicule est complètement bloqué (phase 6).

9. Programme d'ordinateur comprenant des moyens formant code de programme pour effectuer les étapes des revendications 5, 6 et 7, lorsque ledit programme est exécuté sur un ordinateur.

10. Support pouvant être lu par un ordinateur sur lequel un programme est enregistré, ledit support pouvant être lu par un ordinateur comprenant les moyens formant code de programme afin d'effectuer les étapes des revendications 5, 6 et 7, lorsque ledit programme est exécuté sur un ordinateur.
